# EUROPÄISCHE PATENTSCHRIFT

(11) **EP 0 871 782 B1**
(45) Veröffentlichungstag und Bekanntmachung des Hinweises auf die Patenterteilung: **19.12.2001**
(21) Anmeldenummer: 97910150.8
(22) Anmeldetag: 05.11.1997
(51) Int. Cl.: C21B 13/14, C21B 13/00

(54) **VERFAHREN ZUM HERSTELLEN VON EISENSCHWAMM DURCH DIREKTREDUKTION VON EISENOXIDHÄLTIGEM MATERIAL**
PROCESS FOR PRODUCING SPONGE IRON BY DIRECT REDUCTION OF IRON OXIDE-CONTAINING MATERIALS
PROCEDE DE PRODUCTION D'EPONGE DE FER PAR REDUCTION DIRECTE DE MATERIAUX CONTENANT DES OXYDES DE FER

(30) Priorität: 06.11.1996 AT 193396
(43) Veröffentlichungstag der Anmeldung: 21.10.1998
(73) Patentinhaber: VOEST-ALPINE INDUSTRIEANLAGENBAU GMBH, 4020 Linz (AT); Brifer International Ltd., Bridgetown, Barbados (BB)
(72) Erfinder: REIDETSCHLÄGER, Johann, A-4040 Linz (AT); ZELLER, Siegfried, A-4060 Leonding (AT); WALLNER, Felix, A-4020 Linz (AT); WHIPP, Roy, Hubert, Jr., Windermere, FL 34786 (US)
(74) Vertreter: Kopecky, Helmut, Dipl.-Ing.
(86) Internationale Anmeldenummer: AT9700236
(87) Internationale Veröffentlichungsnummer: WO9820171

(56) Entgegenhaltungen:
- EP-A- 0 179 734
- EP-A- 0 209 861
- EP-A- 0 571 358
- WO-A-93/14228
- DE-A- 4 426 623
- FR-A- 2 375 327

## Beschreibung

Die Erfindung betrifft ein Verfahren zum Herstellen von Eisenschwamm durch Direktreduktion von eisenoxidhältigem Material.

Ein Verfahren dieser Art ist beispielsweise aus der US-A - 2,752,234, der US-A - 5,082,251 und der EP-A - 0 571 358, der WO-96/00304 und der DE-B- 24 05 898 bekannt.

Aus der EP-A - 0 571 358 ist es bekannt, die Reduktion von Feinerz nicht ausschließlich über die stark endotherme Reaktion mit H₂ gemäß

*Fe*₂*O*₃ + 3*H*₂ = 2*Fe* + 3*H*₂*O* - Δ*H*,

sondern zusätzlich über die Reaktion mit CO, gemäß

*Fe*₂*O*₃ + 3*CO =* 2*Fe* + 3*CO*₂ + *ΔH*,

die exotherm ist, durchzuführen. Hierdurch gelingt es, die Betriebskosten, insbesondere die Energiekosten, beträchtlich zu senken.

Durch Direktreduktion von eisenoxidhältigem Material gemäß diesem Stand der Technik hergestellter Eisenschwamm weist in der Regel einen Kohlenstoffgehalt in der Höhe zwischen 1 und 1,5 % auf. Für die Weiterverarbeitung des Eisenschwammes ist jedoch ein erhöhter Kohlenstoffgehalt von Vorteil, um beim Einschmelzen des Eisenschwammes und beim anschließenden Frischprozeß Energie einsparen zu können, ohne daß eine separate Kohlenstoffzugabe (Aufkohlung) erforderlich ist.

Die Erfindung stellt sich daher die Aufgabe, ein Verfahren gemäß der eingangs beschriebenen Art dahingehend zu modifizieren, daß der Eisenschwamm einen erhöhten Kohlenstoffgehalt, vorzugsweise in der Größenordnung zwischen 2 und 4 %, insbesondere über 2,5 %, aufweist. Dies soll jedoch nur mit einem geringfügig, wenn überhaupt höheren Energieaufwand ermöglicht sein, so daß gegenüber herkömmlichen Verfahren zur Herstellung von Eisenschwamm nur geringe Zusatzkosten anfallen und die sich beim Frischprozeß einstellende Energieeinsparung nicht kompensiert wird, sondern sich möglichst vollständig auf die Wirtschaftlichkeit des Herstellungsverfahrens für Stahl bzw. Stahlvormaterial auswirkt.

Diese Aufgabe wird erfindungsgemäß durch ein Verfahren der eingangs genannten Art, gekennzeichnet durch die Kombination folgender Merkmale, gelöst:
- Synthesegas, vorzugsweise reformiertes Erdgas, wird mit bei der Direktreduktion des eisenoxidhaltigen Materials entstehendem Topgas vermischt und als CO- und H₂-hältiges Reduktionsgas zur Direktreduktion und zur Erhitzung des eisenoxidhältigen Materials auf eine Reduktionsgastemperatur verwendet,
- das eisenoxidhältige Material wird zusätzlich zum Reduktionsgas einem kohlenstoffhältigen Gas, wie Erdgas, oder einem Gas mit höheren Kohlenwasserstoffen, über eine bestimmte Zeitdauer, die über die zur Fertigreduktion erforderliche Zeit hinausgeht, ausgesetzt,
- ein CO/CO₂-Verhältnis zwischen 2 und 5 wird im Reduktionsgas eingestellt, vorzugsweise ein Verhältnis über 2,5, und insbesondere ein Verhältnis über 3, und
- das so behandelte eisenoxidhältige Material wird als Eisenschwamm ausgetragen.
Aus der WO-96/00304 ist es bekannt, "metal dusting" zu vermindern bzw. zu verhindern, indem ein bestimmtes CO/CO₂-Verhältnis eingestellt wird, und zwar in einem Bereich zwischen 1 und 3, wobei jedoch ein Bereich zwischen 1,5 und 2 angestrebt wird, was für sich zur Lösung der erfindungsgemäßen Aufgabe nichts beiträgt.

Die Herstellung von Eisenschwamm mit einem Kohlenstoffgehalt zwischen 0,5 und 2,5 % ist aus der WO-A - 93/14228 bereits bekannt, u.zw. werden bei diesem bekannten Verfahren kleine Mengen von Erdgas zur Kohlenstoffeinstellung herangezogen, wobei das Erdgas direkt in einen Wirbelschichtreaktor eingebracht wird. Alleine diese Maßnahme ist jedoch wenig effizient, da ein gänzlicher Zerfall des Erdgases bei den bei der Direktreduktion vorgesehenen Reduktionstemperaturen nicht gesichert ist.

Aus der US-A - 5,137,566 ist es bekannt, hochkonzentriertes Eisenkarbid aus Eisenerz mit Hilfe von Reduktionsgas und Aufkohlungsgas herzustellen, wobei infolge der Zeitabhängigkeit der Eisenkarbidbildung eine höhere Verweilzeit für die Umsetzung angestrebt wird. Alleine die Erhöhung der Verweilzeit des eisenoxidhältigen Materials bei einer Direktreduktion bedingt einen beträchtlichen Produktionsrückgang, d.h. einen wesentlich verringerten Ausstoß an reduziertem Material pro Zeiteinheit. Dieses Verfahren ist daher relativ aufwendig und das so hergestellte Eisenkarbid wird dementsprechend nur als Zusatz für die Stahlherstellung eingesetzt, wogegen erfindungsgemäß als Aufgabe gestellt ist, daß der gesamte für die Stahlherstellung eingesetzte Eisenschwamm einen erhöhten Kohlenstoffgehalt aufweist, d.h. dieser so hergestellte Eisenschwamm mit erhöhtem Kohlenstoffgehalt wird nicht nur als Zusatz für die Stahlherstellung verwendet, sondern bildet selbst den Basisstoff hierzu.

Ein Verfahren dieser Art ist auch aus der US-A - 5,437,708 bekannt. Hierbei wird Eisenkarbid mit Hilfe eines Reduktionsgases in einem Direktreduktionsschachtofen hergestellt. Nachteilig ist bei diesem Verfahren ebenfalls die hohe Verweilzeit des eisenoxidhältigen Materials im Reduktionsreaktor. Die Verweilzeit liegt in einem Bereich von 9 bis 15 Stunden, was - wie bereits oben dargelegt - zu einem beträchtlichen Produktionsrückgang führt.

Aus der US-A - Re-32,247 und der FR-A-2 375 327 ist es bekannt, eisenoxidhältiges Material in einer ersten Stufe zu Eisenkarbid umzusetzen und in einer zweiten Stufe direkt aus dem Eisenkarbid Stahl zu erzeugen. Bei diesem bekannten Verfahren wird ein wasserstoffhältiges Reduktionsgas für die Reduktion und ein kohlenstofrhältiges Material zur Bildung von Eisenkarbid eingesetzt. Nachteilig ist hierbei die vollständige Umsetzung des Eisens zu Eisenkarbid, da dies ebenfalls mit einem hohen Energieaufwand (hoher Verbrauch an kohlenstoffhältigem Material bei der Direktreduktion) verbunden ist.

Erfindungsgemäß werden neben dem Reduktionsgas als zusätzliches kohlenstoffhältiges Gas Kohlenwasserstoffe ab C₃H₈ eingesetzt, was den Vorteil aufweist, daß solche Kohlenwasserstoffe auch bei relativ niedrigen Temperaturen leicht zerfallen und daher für die Bildung eines erhöhten Kohlenstoffgehaltes voll wirksam sind. Es genügen erfindungsgemäß geringe Mengen solcher zusätzlich zum Reduktionsgas vorgesehener Kohlenwasserstoffe.

Vorzugsweise wird das erfindungsgemäße Verfahren durchgeführt, indem die Direktreduktion in zwei oder mehreren hintereinander geschalteten Wirbelschichtreaktoren durchgeführt wird und das Erdgas bzw. die höheren Kohlenwasserstoffe in den in Flußrichtung des eisenoxidhältigen Materials letzten Wirbelschichtreaktor eingeleitet werden und diesen sowie nachfolgend die anderen Wirbelschichtreaktoren im Gegenstrom zum eisenoxidhältigen Material durchströmen. Hierdurch ergibt sich eine besonders hohe Effizienz der in Kombination durchzuführenden Maßnahmen, so daß trotz der erhöhten Zeitdauer, die das eisenoxidhältige Material dem Reduktionsgas ausgesetzt wird, kaum ein Produktionsrückgang gegeben ist.

Die erhöhte Zeitdauer für die Direktreduktion des eisenoxidhältigen Materials kann gemäß einer bevorzugten Variante dadurch verwirklicht werden, daß die Direktreduktion in mindestens einem Wirbelschichtreaktor durchgeführt wird, wobei die Betthöhe der Wirbelschicht höher eingestellt ist als die Betthöhe, die mindestens erforderlich ist, um eine Fertigreduktion des eisenoxidhältigen Materials zu erzielen, so daß das zu reduzierende Material über die Zeit, die zum Fertigreduzieren erforderlich ist, hinausgehend dem Reduktionsgas und dem zusätzlich zugeführten kohlenstoffhältigen Gas ausgesetzt ist, oder auch dadurch bewirkt werden, daß die Durchsatzleistung bei der Direktreduktion gegenüber der zur Fertigreduktion des eisenoxidhältigen Materials notwendigen Mindest-Durchsatzleistung reduziert ist.

Eine weitere vorteilhafte Maßnahme für das erfindungsgemäße Verfahren ist dadurch gekennzeichnet, daß die Reduktion mit einer spezifischen Gasmenge an Reduktionsgas, die gegenüber der für die Fertigreduktion des eisenoxidhältigen Materials notwendigen spezifischen Mindest-Gasmenge erhöht ist, durchgeführt wird.

Ein wesentlicher Verfahrensschritt zur Erhöhung des Kohlenstoffgehaltes des Eisenschwammes besteht darin, daß das CO/CO₂-Verhältnis durch eine Einstellung der Fahrweise eines der Herstellung des Synthesegases aus Erdgas durch Reformieren dienenden Reformers durchgeführt wind, indem das Dampf-Erdgas-Verhältnis bei der Speisung des Reformers variiert wird, wobei zweckmäßig das Dampf-Erdgas-Verhältnis im Bereich von 3 bis 4,5, insbesondere auf einen Wert von etwa 3,5, eingestellt wird.

Vorzugsweise erfolgt die Einstellung des CO/CO₂-Verhältnisses dadurch, daß ein Teilvolumen des reformierten Gases, das in einem Reformer aus Dampf und Erdgas hergestellt und anschließend einer CO-Konvertierung zur Erhöhung des H₂-Gehaltes zugeführt wind, direkt, d.h. ohne der CO-Konvertierung unterzogen zu werden, dem Topgas zugemischt wird, wobei die Menge des direkt zugemischten reformierten Gases variabel ist.

Eine weitere bevorzugte Ausführungsvariante ist dadurch gekennzeichnet, daß sowohl das reformierte Gas als auch das Topgas vor der Verwendung als Reduktionsgas einer CO₂-Eliminierung, vorzugsweise einer CO₂-Wäsche, unterzogen werden und daß das Einstellen des CO/CO₂-Verhältnisses dadurch erfolgt, daß zumindest ein Teilvolumen des reformierten Gases unter Umgehung der CO₂-Eliminierung dem Reduktionsgas direkt zugemischt wird.

Die Einstellung des CO/CO₂-Verhältnisses kann auch dadurch erfolgen, daß sowohl das reformierte Gas als auch das Topgas einer CO₂-Eliminierung, vorzugsweise einer CO₂-Wäsche, unterzogen werden, wobei die Einstellung des CO/CO₂-Verhältnisses dadurch erfolgt, daß zumindest ein Teilvolumen des Topgases unter Umgebung der CO₂-Eliminierung dem Reduktionsgas direkt zugemischt wind. Es kann auch der Eliminierungsgrad für CO₂ variiert werden, u.zw. dahingehend, daß ein Teil des CO₂ im zu reinigenden Gas verbleibt.

Vorzugsweise wird die Verweilzeit des eisenoxidhältigen Materials auf 40 bis 80 min, vorzugsweise 40 bis 60 min, erstreckt.

Zur Einstellung eines bestimmten Kohlenstoffgehaltes im Eisenschwamm kann vorzugsweise auch der H₂S-Gehalt im Reduktionsgas dienen.

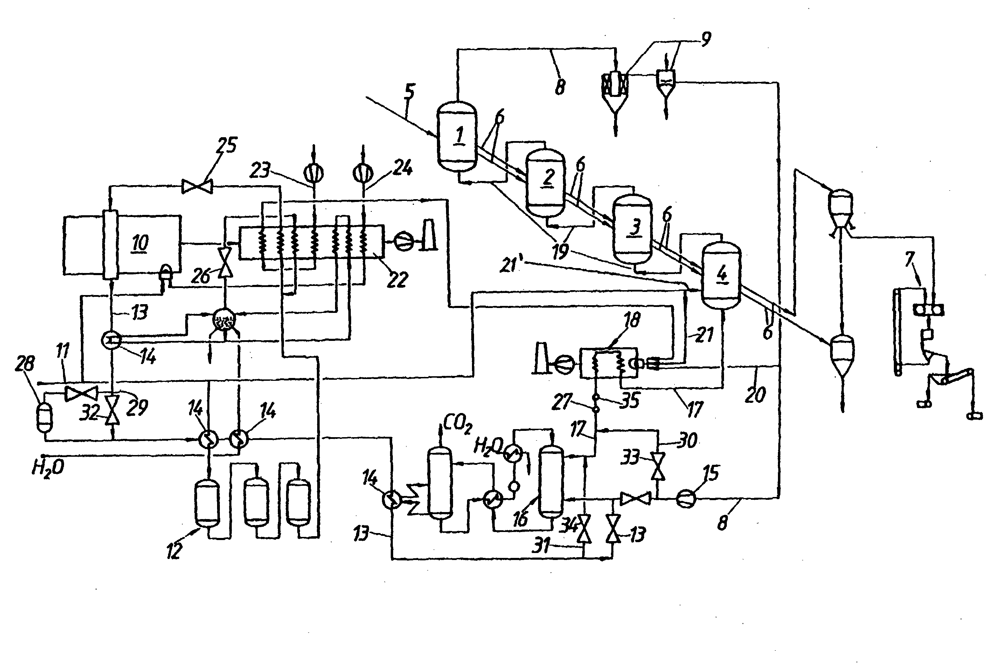

Das erfindungsgemäße Verfahren ist nachstehend anhand der Zeichnung, die ein Verfahrensschema nach einer bevorzugten Ausführungsform zeigt, näher erläutert.

Eine Anlage zur Durchführung des erfindungsgemäßen Verfahrens weist vier in Serie hintereinander geschaltete Wirbelschichtreaktoren 1 bis 4 auf, wobei eisenoxidhältiges Material, wie Feinerz, über eine Erzzuleitung 5 dem ersten Wirbelschichtreaktor 1, in dem die Aufheizung auf Reduktionstemperatur (bzw. eine Vorreduktion) stattfindet, zugeleitet und anschließend von Wirbelschichtreaktor zu Wirbelschichtreaktor über Förderleitungen 6 geleitet wird. Das fertig reduzierte Material (Eisenschwamm) wird in einer Brikettieranlage 7 heißbrikettiert. Erforderlichenfalls wird das reduzierte Eisen während der Brikettierung vor einer Reoxidation durch ein nicht dargestelltes Inertgas-System geschützt.

Vor Einleitung des Feinerzes in den ersten Wirbelschichtreaktor 1 wird es einer Erzvorbereitung, wie einer Trocknung und einem Sieben, unterzogen, die nicht näher dargestellt ist.

Reduktionsgas wind im Gegenstrom zum Erzdurchfluß von Wirbelschichtreaktor 4 zu Wirbelschichtreaktor 3 bis 1 geführt und als Topgas über eine Topgas-Ableitung 8 aus dem in Gasströmungsrichtung letzten Wirbelschichtreaktor 1 abgeleitet und in einem Naßwäscher 9 gekühlt und gewaschen.

Die Herstellung des Reduktionsgases erfolgt durch Reformieren von über die Leitung 11 zugeführtem und in einer Entschwefelungsanlage 12 entschwefeltem Erdgas in einem Reformer 10. Das aus Erdgas und Dampf gebildete, den Reformer 10 verlassende Gas besteht im wesentlichen aus H₂, CO, CH₄, H₂O und CO₂. Dieses reformierte Erdgas wird über die Reformgasleitung 13 mehreren Wärmetauschern 14 zugeleitet, in denen es auf 80 bis 150°C abgekühlt wird, wodurch Wasser aus dem Gas auskondensiert wird.

Die Reformgasleitung 13 mündet in die Topgas-Ableitung 8, nachdem das Topgas mittels eines Kompressors 15 verdichtet wurde. Das sich so bildende Mischgas wird durch einen CO₂-Wäscher 16 hindurchgeschickt und von CO₂ sowie dabei auch von H₂S befreit. Anstelle des CO₂-Wäschers kann auch eine andere CO₂-Entfernungsanlage, beispielsweise eine Druckwechsel-Adsorptionsanlage, vorgesehen sein. Das Mischgas steht nunmehr als Reduktionsgas zur Verfügung. Dieses Reduktionsgas wind über eine Reduktionsgaszuleitung 17 in einem dem CO₂-Wäscher 16 nachgeordneten Gaserhitzer 18 auf eine Reduktionsgastemperatur von etwa 800°C erhitzt und dem in Gasdurchflußrichtung ersten Wirbelschichtreaktor 4 zugeführt, wo es mit den Feinerzen zur Erzeugung von direktreduziertem Eisen reagiert. Die Wirbelschichtreaktoren 4 bis 1 sind in Serie geschaltet; das Reduktionsgas gelangt über die Verbindungsleitungen 19 von Wirbelschichtreaktor zu Wirbelschichtreaktor, u.zw. im Gegenstrom zum eisenoxidhältigen Material.

Ein Teil des Topgases wird aus dem Gas-Kreislauf 8, 17, 19 ausgeschleust, um eine Anreicherung von Inertgasen, wie N₂, zu vermeiden. Das ausgeschleuste Topgas wird über eine Zweigleitung 20 dem Gaserhitzer 18 zur Erwärmung des Reduktionsgases zugeführt und dort verbrannt. Eventuell fehlende Energie wird durch Erdgas, welches über die Zuleitung 21 zugeführt wird, ergänzt.

Die fühlbare Wärme des aus dem Reformer 10 austretenden reformierten Erdgases sowie der Reformerrauchgase wird in einem Rekuperator 22 genutzt, um das Erdgas nach Durchlauf durch die Entschwefelungsanlage 12 vorzuwärmen, den für die Reformierung benötigten Dampf zu erzeugen sowie die dem Gaserhitzer 18 über die Leitung 23 zugeführte Verbrennungsluft sowie gegebenenfalls auch das Reduktionsgas vorzuwärmen. Die dem Reformer 10 über die Leitung 24 zugeführte Verbrennungsluft wird ebenfalls vorgewärmt.

Zur Erhöhung des Kohlenstoffgehaltes im Eisenschwamm wird als eine der wichtigsten Maßnahmen ein bestimmtes CO/CO₂-Verhältnis eingestellt, u.zw. in einem Bereich zwischen 2 und 5, vorzugsweise in einem Bereich zwischen 2 und 3. Erfindungsgemäß wird dies nach einer ersten Variante dadurch erreicht, daß das Dampf/Erdgas-Verhältnis der Speisung des Reformers 10 variiert wird, wobei das Dampf/Erdgas-Verhältnis vorzugsweise auf einen in einem Bereich zwischen 3 bis 4,5 liegenden Wert, insbesondere auf einen Wert von 3,5 eingestellt wird. Die hierzu dienenden Stellventile bzw. Regelventile sind mit 25 und 26 bezeichnet und von einer das CO/CO₂-Verhältnis des Reduktionsgases messenden Meßstation 27 steuer- bzw. regelbar.

Wie aus der Zeichnung ersichtlich ist, wird das reformierte Gas, bevor es der CO₂-Wäsche bei 16 zugeleitet wird, zur Erhöhung des H₂-Gehaltes einem CO-Konverter 28 zumindest mit einem Teilvolumen zugeführt. Das restliche Teilvolumen des reformierten Gases wird direkt dem Topgas zugemischt, indem es über eine Bypass-Leitung 29 den CO-Konverter 28 überbrückt. Hierdurch gelingt es, den CO-Gehalt auf einen gewünschten Wert einzustellen, so daß auch durch diese Verfahrensmaßnahme das gewünschte CO/CO₂-Verhältnis zur Erhöhung des Kohlenstoffgehaltes eingestellt werden kann.

Die Einstellung eines bestimmten CO/CO₂-Verhältnisses kann weiters dadurch erfolgen, daß ein Teilvolumen des Topgases über eine den CO₂-Wäscher 16 umgehende Bypass-Leitung 30 direkt in die Reduktionsgaszuleitung 17 eingeleitet wird. Weiters kann auch ein Teilvolumen des reformierten Gases über eine den CO₂-Wäscher 16 überbrückende Bypass-Leitung 31 der Reduktionsgaszuleitung 17 direkt zugeführt werden, welche Bypass-Leitung 31 dann von der Reformgasleitung 13 ausgeht.

Sämtliche Bypass-Leitungen 29, 30, 31 sind mit Stell- bzw. Regelventilen 32, 33, 34 ausgestattet, die aufgrund einer Messung des CO/CO₂-Verhältnisses des Reduktionsgases mittels der Meßstation 27 eingestellt bzw. geregelt werden.

Das gewünschte CO/CO₂-Verhältnis im Reduktionsgas kann auch dadurch eingestellt werden, daß zwar das gesamte Topgas und das gesamte reformierte Gas durch den CO₂-Wäscher 16 hindurchgeleitet werden, dieser jedoch auf einen Auswaschungsgrad eingestellt wird, bei dem ein Teil des CO₂ (und damit auch ein Teil des H₂S) im aus dem CO₂-Wäscher 16 austretenden Gas verbleibt. Dies hat den Vorteil, daß keine Nebeneinrichtungen, wie Bypass-Leitungen 29, 30, 31 mit Ventilen 32, 33, 34, vorgesehen werden müssen, bedingt allerdings, daß die gesamte Gasmenge, also das gesamte Topgas und das gesamte reformierte Gas, durch den CO₂-Wäscher 16 hindurchgeleitet werden müssen, so daß dieser auf diese Menge bemessen sein muß.

Das den Wirbelschichtreaktor 1 verlassende Topgas weist - in Abhängigkeit vom Schwefelgehalt des Erzes - einen H₂S-Gehalt von 40 bis 140 ppmV auf. Das H₂S-Gas bildet sich während der Erhitzung des Feinerzes auf Reduktionstemperatur bzw. während der Vorreduktion des Feinerzes.

Da ein erhöhter H₂S-Gehalt im Reduktionsgas ebenfalls zur Erhöhung des Kohlenstoffgehaltes des Eisenschwammes beiträgt, ist es besonders vorteilhaft, wenn H₂S nicht mehr zur Gänze mittels des CO₂-Wäschers aus dem Topgas ausgewaschen wird, sondern dafür Sorge getragen wird, daß der fiir das Reduktionsgas gewünschte Prozentsatz von H₂S aus dem Topgas dem Reduktionsgas zugeführt wird. Dies kann im vorliegenden Fall mittels der den CO₂-Wäscher 16 umgehenden Bypass-Leitung 30 verwirklicht werden, die über das Stell- bzw. Regelventil 33 von der Topgasableitung 8 ausgeht und in die Reduktionsgaszuleitung 17 mündet. Das Regelventil 33 ist derart einstellbar, daß ein H₂S-Gehalt in der Größe von 20 bis 40 ppmV, vorzugsweise in der Größe von etwa 25 ppmV, im Reduktionsgas vorhanden ist. Das Regelventil wird in diesem Fall vorzugsweise über eine H₂S-Meßeinrichtung 35 aktiviert.

Die oben beschriebenen Maßnahmen zur Einstellung des gewünschten CO/CO₂-Verhältnisses im Reduktionsgas können einzeln oder auch zu mehreren sowie auch alle gemeinsam ergriffen werden, so daß die für die jeweiligen Betriebsverhältnisse und in Abhängigkeit der Zusammensetzung des Erzes etc. günstigste Verfahrensvariante gewählt werden kann.

Die Einstellung des CO/CO₂-Verhältnisses wird erfindungsgemäß mit der zusätzlichen Einleitung eines kohlenstoffhältigen Gases, wie Erdgas, oder besser Kohlenwasserstoffe ab C₃H₈ zusätzlich zum Reduktionsgas in die Wirbelschichtreaktoren sowie mit einer Erhöhung der Zeitdauer, die das eisenoxidhältige Material bei der Direktreduktion dem Reduktionsgas ausgesetzt ist, kombiniert angewendet.

Das zusätzlich zugeführte kohlenstoffhältige Gas kann dem Reduktionsgas vor Einleitung in den in Flußrichtung des eisenoxidhältigen Materials letztangeordneten Wirbelschichtreaktor 4 zugemengt werden oder es wird, wie in der Figur dargestellt, über eine separate Leitung 21' in den Wirbelschichtreaktor 4 eingebracht.

Die Erhöhung der Zeitdauer, die das eisenoxidhältige Material dem Reduktionsgas sowie dem zusätzlich zugeführten kohlenstoffhältigen Gas ausgesetzt wird, kann in Abhängigkeit vom gewünschten Endkohlenstoffgehalt des Eisenschwammes dimensioniert werden. Auf jeden Fall wird das eisenoxidhältige Material über die zur Fertigreduktion erforderliche Zeit hinaus dem Reduktionsgas sowie dem zusätzlich zugeführten kohlenstoffhältigen Gas ausgesetzt.

### Beispiel I

In einer Anlage gemäß obiger Beschreibung zur Direktreduktion von Feinerz, die auf eine Erzeugung von 70 t/h von Eisenschwamm ausgelegt ist, werden 100 t/h getrocknetes Feinerz eingebracht. Die Analyse des Feinerzes ist folgende:
Hämatit 94,2 %
Gangart 2,2 %
Schwefel 0,02 %

Von dem bei der Direktreduktion entstehenden Topgas werden 79.000 Nm³/h mit 54.000 Nm³/h reformiertem kaltem Erdgas gemischt und über den CO₂-Wäscher 16 geleitet, in dem das gemischte Gas von CO₂ und vom größten Anteil des Schwefels befreit wird.

Das reformierte Erdgas und das Topgas weisen die in der nachstehenden Tabelle angegebene chemische Zusammensetzung auf (Vol.%):

| | Reformiertes Erdgas | Topgas |
|---|---|---|
| CH₄ | 3,0 | 31,7 |
| CO | 10,5 | 6,1 |
| CO₂ | 10,0 | 6,0 |
| H₂ | 63,0 | 51,8 |
| H₂O | 13,5 | 0,70 |
| N₂ | 0,0 | 3,70 |
| H₂S | 0,0 | 78,0 ppmV |

Die Temperatur des reformierten Erdgases beträgt 120°C, die des Topgases 100°C. Das aus dem CO₂-Wäscher 16 austretende Gasgemisch ist auf eine Temperatur von 68°C gekühlt. Die chemische Zusammensetzung des gekühlten Gasgemisches ist wie folgt:

| | |
|---|---|
| CH₄ | 21,8 |
| CO | 9,8 |
| CO₂ | 1,3 |
| H₂ | 63,0 |
| H₂O | 1,7 |
| N₂ | 2,4 |
| H₂S | 5 ppmV |

Dieses Gasgemisch wird mit 79.000 Nm³/h des Topgases, das nicht durch den CO₂-Wäscher 16 hindurchgeleitet wurde, sondern über die Bypass-Leitung 30 in die Reduktionsgaszuleitung 17 zugeleitet wird, gemischt. Durch dieses Mischen wird das dem Gaserhitzer 18 und nachfolgend den Wirbelschichtreaktoren 1 bis 4 zugeführte Reduktionsgas gebildet, das eine Temperatur von 75°C und folgende chemische Zusammensetzung aufweist:

| Reduktionsgas | |
|---|---|
| CH₄ | 25,2 |
| CO | 8,0 |
| CO₂ | 2,9 |
| H₂ | 59,7 |
| H₂O | 1,4 |
| N₂ | 2,8 |
| H₂S | 30 ppmV |

Zusätzlich wird Erdgas in einer Menge von 3.400 Nm³/h in den Wirbelschichtreaktor 4 über die Leitung 21' eingespeist.

Die Verweilzeit im untersten Wirbelschichtreaktor 4 beträgt ca. 40 min.

Der Metallisierungsgrad (Feₘₑₜ/Fe_{ges}) des Eisenschwammes beträgt ca. 92 %, der C-Gehalt ca. 2,5 %, maximal 5 %.

### Beispiel II

Anhand nachstehender Tabelle ist die Produktion von Eisenschwamm mit 1,1 % Kohlenstoff gemäß dem Stand der Technik verglichen mit der Herstellung von Eisenschwamm mit einem erhöhten Kohlenstoffgehalt von 2,5 %.

| Erzzusammensetzung Gew.% | | Produktzusammensetzung Gew.% | | Reduktionsgaszusammensetzung Vol.% | | |
|---|---|---|---|---|---|---|
| | | 1,1%C | 2,5%C | 1,1%C | | 2,5%C |
| Fe_{TOTAL} | 65,57 | 93,41 | 89,83 | H₂ | 63,34 | 60,46 |
| Fe₂O₃ | 93,75 | 1,62 | 3,26 | CO | 6,81 | 6,32 |
| FeO | 0 | 9,64 | 11,6 | H₂O | 1,48 | 1,4 |
| Fe | 0 | 84,79 | 80,87 | CO₂ | 3,38 | 2,67 |
| Gangart | 1,8 | 2,68 | 1,6 | CH₄ | 21,8 | 25,27 |
| C | 0 | 1,1 | 2,5 | N₂ | 3,19 | 3,9 |
| MgO | 0,00 | 0,15 | 0,15 | | | |
| S | 0,02 | 0,02 | 0,02 | | | |

Für die Herstellung des Eisenschwammes mit 1,1 % C wird in den untersten Wirbelschichtreaktor 4 kein Erdgas und zur Herstellung des Eisenschwammes mit 2,5 % C Erdgas in einer Menge von 3.400 Nm³/h eingeleitet. Die Verweilzeit im untersten Wirbeischiohtreaktor 4 beträgt im Fall des Eisenschwammes mit niedrigem Kohlenstoffgehalt 33 min und im Fall des Eisenschwammes mit erhöhtem Kohlenstoffgehalt 37,5 min. Das CO/CO₂-Verhältnis beträgt im ersten Fall 2 und im zweiten Fall 2,4. Das zur Erzeugung des Reduktionsgases herangezogene Erdgas weist die in der nachstehenden Tabelle angegebene chemische Zusammensetzung auf.

| Erdgas Vol.% | |
|---|---|
| CH₄ | 81,42 |
| C₂H₆ | 7,75 |
| C₃H₈ | 1,9 |
| CO₂ | 7,78 |
| C₄ | 1,15 |

## Patentansprüche

1. Verfahren zum Herstellen von Eisenschwamm durch Direktreduktion von eisenoxidhältigem Material, **gekennzeichnet durch** folgende Merkmale:
• Synthesegas, vorzugsweise reformiertes Erdgas, wird mit bei der Direktreduktion des eisenoxidhältigen Materials entstehendem Topgas vermischt und als CO- und H₂-hältiges Reduktionsgas zur Direktreduktion und zur Erhitzung des eisenoxidhältigen Materials auf eine Reduktionsgastemperatur verwendet,
• das eisenoxidhältige Material wird zusätzlich zum Reduktionsgas einem kohlenstoffhältigen Gas, wie Erdgas oder einem Gas mit höheren Kohlenwasserstoffen, über eine bestimmte Zeitdauer, die über die zur Fertigreduktion erforderliche Zeit hinausgeht, ausgesetzt,
• ein CO/CO₂-Verhältnis zwischen 2 und 5, vorzugsweise ein Verhältnis über 2,5, wird im Reduktionsgas eingestellt und
• das so behandelte eisenoxidhältige Material wird als Eisenschwamm ausgebracht.

2. Verfahren nach Anspruch 1, **dadurch gekennzeichnet, daß** neben dem Reduktionsgas höhere Kohlenwasserstoffe ab C₃H₈ zusätzlich zur Direktreduktion eingesetzt werden.

3. Verfahren nach Anspruch 1 oder 2, **dadurch gekennzeichnet, daß** die Direktreduktion in zwei oder mehreren hintereinander geschalteten Wirbelschichtreaktoren durchgeführt wird und daß das Erdgas bzw. die höheren Kohlenwasserstoffe in den in Flußrichtung des eisenoxidhältigen Materials letzten Wirbelschichtreaktor eingeleitet werden und diesen sowie nachfolgend die anderen Wirbelschichtreaktoren im Gegenstrom zum eisenoxidhältigen Material durchströmen.

4. Verfahren nach einem oder mehreren der Ansprüche 1 bis 3, **dadurch gekennzeichnet, daß** die Direktreduktion in mindestens einem Wirbelschichtreaktor durchgeführt wird, wobei die Betthöhe der Wirbelschicht höher eingestellt ist als die Betthöhe, die mindestens erforderlich ist, um eine Fertigreduktion des eisenoxidhältigen Materials zu erzielen, so daß das zu reduzierende Material über die Zeit, die zum Fertigreduzieren erforderlich ist, hinausgehend dem Reduktionsgas und dem zusätzlich zugeführten kohlenstoffhaltigen Gas ausgesetzt ist.

5. Verfahren nach einem oder mehreren der Ansprüche 1 bis 4, **dadurch gekennzeichnet, daß** die Durchsatzleistung bei der Direktreduktion gegenüber der zur Fertigreduktion des eisenoxidhältigen Materials notwendigen Mindest-Durchsatzleistung reduziert ist.

6. Verfahren nach einem oder mehreren der Ansprüche 1 bis 5, **dadurch gekennzeichnet, daß** die Reduktion mit einer spezifischen Gasmenge an Reduktionsgas, die gegenüber der für die Fertigreduktion des eisenoxidhältigen Materials notwendigen spezifischen Mindest-Gasmenge erhöht ist, durchgeführt wird.

7. Verfahren nach einem oder mehreren der Ansprüche 1 bis 6, **dadurch gekennzeichnet, daß** das CO/CO₂-Verhältnis durch eine Einstellung der Fahrweise eines der Herstellung des Synthesegases aus Erdgas durch Reformieren dienenden Reformers (10) durchgeführt wird, indem das Dampf-Erdgas-Verhältnis bei der Speisung des Reformers (10) variiert wird.

8. Verfahren nach Anspruch 7, **dadurch gekennzeichnet, daß** das Dampf-Erdgas-Verhältnis im Bereich von 3 bis 4,5, insbesondere auf einen Wert von etwa 3,5, eingestellt wird.

9. Verfahren nach einem oder mehreren der Ansprüche 1 bis 8, **dadurch gekennzeichnet, daß** die Einstellung des CO/CO₂-Verhältnisses dadurch erfolgt, daß ein Teilvolumen des reformierten Gases, das in einem Reformer (10) aus Dampf und Erdgas hergestellt und anschließend einer CO-Konvertierung zur Erhöhung des H₂-Gehaltes zugeführt wird, direkt, d.h. ohne der CO-Konvertierung unterzogen zu werden, dem Topgas zugemischt wird, wobei die Menge des direkt zugemischten reformierten Gases variabel ist.

10. Verfahren nach einem oder mehreren der Ansprüche 1 bis 9, **dadurch gekennzeichnet, daß** sowohl das reformierte Gas als auch das Topgas vor der Verwendung als Reduktionsgas einer CO₂-Eliminierung, vorzugsweise einer CO₂-Wäsche, unterzogen werden und daß das Einstellen des CO/CO₂-Verhältnisses dadurch erfolgt, daß zumindest ein Teilvolumen des reformierten Gases unter Umgehung der CO₂-Eliminierung dem Reduktionsgas direkt zugemischt wird.

11. Verfahren nach einem oder mehreren der Ansprüche 1 bis 10, **dadurch gekennzeichnet, daß** sowohl das reformierte Gas als auch das Topgas einer CO₂-Eliminierung, vorzugsweise einer CO₂-Wäsche, unterzogen werden, wobei die Einstellung des CO/CO₂-Verhältnisses dadurch erfolgt, daß zumindest ein Teilvolumen des Topgases unter Umgehung der CO₂-Eliminierung dem Reduktionsgas direkt zugemischt wird.

12. Verfahren nach einem oder mehreren der Ansprüche 1 bis 11, **dadurch gekennzeichnet, daß** sowohl das reformierte Gas als auch das Topgas vor der Verwendung als Reduktionsgas einer CO₂-Eliminierung, vorzugsweise einer CO₂-Wäsche, unterzogen werden, wobei die Einstellung des CO/CO₂-Verhältnisses dadurch erfolgt, daß der Eliminierungsgrad für CO₂ variiert wird, u.zw. dahingehend, daß ein Teil des CO₂ im zu reinigenden Gas verbleibt.

13. Verfahren nach einem oder mehreren der Ansprüche 1 bis 12, **dadurch gekennzeichnet, daß** die Verweilzeit des eisenoxidhältigen Materials auf 40 bis 80 min, vorzugsweise 40 bis 60 min, erstreckt wird.

14. Verfahren nach einem oder mehreren der Ansprüche 1 bis 13, **dadurch gekennzeichnet, daß** die Einstellung eines bestimmten C-Gehaltes im Eisenschwamm durch Einstellen des H₂S-Gehaltes im Reduktionsgas erfolgt.

15. Verfahren nach einem oder mehreren der Ansprüche 1 bis 14, **dadurch gekennzeichnet, daß** ein CO/CO₂-Verhältnis im Reduktionsgas über 3 eingestellt wird.

## Claims

1. A process for producing sponge iron by direct reduction of material containing iron oxide, **characterised by** the following features:
• synthesis gas, preferably reformed natural gas, is mixed with top gas arising in the course of the direct reduction of the material containing iron oxide and is used by way of reducing gas containing CO and H₂ for the direct reduction of the material containing iron oxide and for heating said material to a reducing-gas temperature,
• in addition to being exposed to the reducing gas, the material containing iron oxide is exposed to a carbonaceous gas, such as natural gas or a gas with higher hydrocarbons, over a certain period which exceeds the time required for full reduction,
• a CO/CO₂ ratio between 2 and 5, preferably a ratio above 2.5, is adjusted in the reducing gas and
• the iron-oxide-containing material that has been treated in this way is output as sponge iron.

2. Process according to Claim 1, **characterised in that** higher hydrocarbons, starting from C₃H₈, are employed in addition to the reducing gas for the direct reduction.

3. Process according to Claim 1 or 2, **characterised in that** the direct reduction is carried out in two or more fluidized-bed reactors connected in series and **in that** the natural gas or the higher hydrocarbons are introduced into the fluidized-bed reactor that is last in the direction of flow of the material containing iron oxide and flow through said fluidized-bed reactor as well as, subsequently, the other fluidized-bed reactors in counterflow relative to the material containing iron oxide.

4. Process according to one or more of Claims 1 to 3, **characterised in that** the direct reduction is carried out in at least one fluidized-bed reactor, the bed height of the fluidized bed being set higher than the bed height that is at least required in order to achieve a full reduction of the material containing iron oxide, so that the material to be reduced is exposed to the reducing gas and to the additionally supplied carbonaceous gas over a time exceeding the time required for full reduction.

5. Process according to one or more of Claims 1 to 4, **characterised in that** the throughput capacity in the course of the direct reduction is reduced in comparison with the minimum throughput capacity necessary for full reduction of the material containing iron oxide.

6. Process according to one or more of Claims 1 to 5, **characterised in that** the reduction is carried out with a specific amount of reducing gas which is increased in comparison with the specific minimum amount of gas necessary for full reduction of the material containing iron oxide.

7. Process according to one or more of Claims 1 to 6, **characterised in that** the CO/CO₂ ratio is implemented by an adjustment of the mode of operation of a reformer (10) serving for production of the synthesis gas from natural gas by reforming, by the steam/natural-gas ratio being varied in the course of feeding the reformer (10).

8. Process according to Claim 7, **characterised in that** the steam/natural-gas ratio is adjusted within the range from 3 to 4.5, in particular to a value of approximately 3.5.

9. Process according to one or more of Claims 1 to 8, **characterised in that** the adjustment of the CO/CO₂ ratio is effected by a partial volume of the reformed gas which is produced in a reformer (10) from steam and natural gas and which is subsequently supplied to a CO conversion stage with a view to increasing the H₂ content being admixed directly, i.e. without being subjected to the CO conversion stage, to the top gas, the amount of the directly admixed reformed gas being variable.

10. Process according to one or more of Claims 1 to 9, **characterised in that** prior to use by way of reducing gas both the reformed gas and the top gas are subjected to a CO₂ elimination, preferably to a CO₂ scrubbing, and **in that** adjustment of the CO/CO₂ ratio is effected by at least a partial volume of the reformed gas being admixed to the reducing gas directly, bypassing the CO₂ elimination.

11. Process according to one or more of Claims 1 to 10, **characterised in that** both the reformed gas and the top gas are subjected to a CO₂ elimination, preferably a CO₂ scrubbing, adjustment of the CO/CO₂ ratio being effected by at least a partial volume of the top gas being admixed to the reducing gas directly, bypassing the CO₂ elimination.

12. Process according to one or more of Claims 1 to 11, **characterised in that** prior to use by way of reducing gas both the reformed gas and the top gas are subjected to a CO₂ elimination, preferably a CO₂ scrubbing, adjustment of the CO/CO₂ ratio being effected by the degree of elimination in respect of CO₂ being varied, specifically to the effect that some of the CO₂ remains in the gas to be purified.

13. Process according to one or more of Claims 1 to 12, **characterised in that** the dwell-time of the material containing iron oxide is extended to 40 to 80 min, preferably 40 to 60 min.

14. Process according to one or more of Claims 1 to 13, **characterised in that** adjustment of a certain C content in the sponge iron is effected by adjusting the H₂S content in the reducing gas.

15. Process according to one or more of Claims 1 to 14, **characterised in that** a CO/CO₂ ratio above 3 is adjusted in the reducing gas.

## Revendications

1. Procédé pour la préparation d'éponge de fer par réduction directe d'un matériau contenant de l'oxyde de fer, **caractérisé par** les caractéristiques suivantes :
- du gaz de synthèse, de préférence du gaz naturel réformé, est mélangé avec le gaz de tête produit par la réduction directe du matériau contenant de l'oxyde de fer et est utilisé comme gaz de réduction contenant CO et H₂ pour la réduction directe et pour le chauffage du matériau contenant de l'oxyde de fer à une température du gaz de réduction,
- le matériau contenant de l'oxyde de fer est exposé en plus du gaz de réduction à un gaz carboné, comme du gaz naturel ou un gaz avec des hydrocarbures supérieurs, sur une certaine durée qui dépasse la durée nécessaire pour la réduction complète,
- un rapport CO/CO₂ compris entre 2 et 5, de préférence un rapport supérieur à 2,5 est ajusté dans le gaz de réduction, et
- le matériau contenant de l'oxyde de fer ainsi traité est évacué dans la forme d'éponge de fer.

2. Procédé selon la revendication 1, **caractérisé en ce que** l'on utilise en outre pour la réduction directe en plus du gaz de réduction des hydrocarbures supérieurs à partir de C₃H₈.

3. Procédé selon la revendication 1 ou 2, **caractérisé en ce que** la réduction directe est réalisée dans deux ou plusieurs réacteurs à lit fluidisé raccordés en série et **en ce que** le gaz naturel respectivement les hydrocarbures supérieurs sont introduits dans le dernier réacteur à lit fluidisé de la direction d'écoulement du matériau contenant de l'oxyde de fer et parcourt celui-ci ainsi que les autres réacteurs à lit fluidisé suivants à contre-courant du matériau contenant de l'oxyde de fer.

4. Procédé selon l'une ou plusieurs quelconques des revendications 1 à 3, **caractérisé en ce que** la réduction directe est réalisée dans au moins un réacteur à lit fluidisé, la hauteur de lit du lit fluidisé étant ajustée à une valeur supérieure à la hauteur minimale de lit qui est nécessaire pour atteindre une réduction complète du matériau contenant de l'oxyde de fer, de telle sorte que le matériau à réduire est exposé au gaz de réduction et au gaz carboné introduit en plus sur la durée dépassant celle nécessaire pour la réduction complète.

5. Procédé selon l'une ou plusieurs quelconques des revendications 1 à 4, **caractérisé en ce que** la capacité dans la réduction directe est réduite par rapport à la capacité minimale nécessaire pour la réduction complète du matériau contenant de l'oxyde de fer.

6. Procédé selon l'une ou plusieurs quelconques des revendications 1 à 5, **caractérisé en ce que** la réduction est réalisée avec une quantité spécifique de gaz de réduction, laquelle est supérieure à la quantité de gaz minimale spécifique nécessaire pour la réduction totale du matériau contenant de l'oxyde de fer.

7. Procédé selon l'une ou plusieurs quelconques des revendications 1 à 6, **caractérisé en ce que** le rapport CO/CO₂ est réalisé par un ajustement de la manière de procéder d'un réformeur (10) servant à la préparation du gaz de synthèse à partir de gaz naturel par réformage, **en ce que** le rapport vapeur-gaz naturel dans l'alimentation du réformeur (10) varie.

8. Procédé selon la revendication 7, **caractérisé en ce que** le rapport vapeur-gaz naturel est ajusté dans le domaine de 3 à 4,5, en particulier à une valeur d'environ 3,5.

9. Procédé selon l'une ou plusieurs quelconques des revendications 1 à 8, **caractérisé en ce que** l'ajustement du rapport CO/CO₂ est réalisé **en ce qu'**un volume partiel du gaz réformé qui est préparé dans un réformeur (10) à partir de vapeur et de gaz naturel et qui est introduit ensuite dans une conversion de CO pour augmenter la teneur en H₂ est mélangé directement, c'est-à-dire sans le soumettre à la conversion de CO, avec le gaz de tête, la quantité du gaz réformé mélangé directement étant variable.

10. Procédé selon l'une ou plusieurs quelconques des revendications 1 à 9, **caractérisé en ce qu'**aussi bien le gaz réformé que le gaz de tête sont soumis avant l'utilisation en tant que gaz de réduction à une élimination du CO₂, de préférence à un lavage du CO₂, et **en ce que** l'ajustement du rapport CO/CO₂ est réalisé **en ce que** l'on mélange au moins un volume partiel du gaz réformé directement avec le gaz de réduction en bipassant l'élimination de CO₂.

11. Procédé selon l'une ou plusieurs quelconques des revendications 1 à 10, **caractérisé en ce qu'**aussi bien le gaz réformé que le gaz de tête sont soumis à une élimination de CO₂, de préférence à un lavage de CO₂, l'ajustement du rapport CO/CO₂ étant réalisé **en ce que** l'on mélange au moins un volume partiel du gaz de tête directement avec le gaz de réduction en bipassant l'élimination de CO₂.

12. Procédé selon l'une ou plusieurs quelconques des revendications 1 à 11, **caractérisé en ce qu'**aussi bien le gaz réformé que le gaz de tête sont soumis avant l'utilisation comme gaz de réduction à une élimination de CO₂, de préférence à un lavage de CO₂, l'ajustement du rapport CO/CO₂ étant réalisé **en ce que** le degré d'élimination pour CO₂ varie, c'est-à-dire **en ce qu'**une partie du CO₂ reste dans le gaz à purifier.

13. Procédé selon l'une ou plusieurs quelconques des revendications 1 à 12, **caractérisé en ce que** le temps de séjour du matériau contenant de l'oxyde de fer est porté à de 40 à 80 min, de préférence à de 40 à 60 min.

14. Procédé selon l'une ou plusieurs quelconques des revendications 1 à 13, **caractérisé en ce que** l'ajustement d'une certaine teneur en C dans l'éponge de fer est réalisé par ajustement de la teneur en H₂S dans le gaz de réduction.

15. Procédé selon l'une ou plusieurs quelconques des revendications 1 à 14, **caractérisé en ce qu'**un rapport CO/CO₂ dans le gaz de réduction est ajusté à une valeur supérieure à 3.
